# EUROPEAN PATENT APPLICATION

(11) **EP 2 547 116 A2**
(43) Date of publication of application: **16.01.2013**
(21) Application number: 12161693.2
(22) Date of filing: 28.03.2012
(51) Int. Cl.: H04N 21/434, H04N 21/258, H04N 21/2362, H04N 5/50

(54) **Method for protecting digital broadcast content and communication apparatus using the same**

(30) Priority: 12.07.2011 TW 100124630
(71) Applicant: ITE Tech. Inc, Hsinchu (TW)
(72) Inventor: Wang, Chien-Fa, 112 Taipei City (TW)
(74) Representative: Becker Kurig Straus

(57) **Abstract**

A method for protecting digital broadcast content and a communication apparatus using the same are proposed. The method is adapted for a communication apparatus and includes the following steps: acquiring and encoding a program content; providing a program association table (PAT) and a program map table (PMT) in a service information/program specific information (SI/PSI) of the program content; controlling a switch unit to receive the PAT and the PMT, and selectively providing the received tables to a multiplexer; providing other tables in the SI/PSI; multiplexing the encoded program content, the PAT, the PMT and the SI/PSI into a transport stream by the multiplexer, where the switch unit provides the PAT and the PMT to the multiplexer when a receiver that receives the transport stream is executing a scan channel process; and transmitting the transport stream.

## Description

### BACKGROUND

### Field of the Invention

The invention relates to a signal transmission method, and, particularly, the invention relates to a method for protecting digital broadcast content and a communication apparatus using the same method.

### Description of Related Art

In general, when it is required to protect content of the transmitted signal from being decoded by a receiver which has not been granted permission for accessing the content, a most direct approach is to encode the content by a preconfigured encryption method before the data of the content is modulated at the transmitter, and transmitting the modulated signal afterwards. After the data of the content is transmitted through wireless medium, the modulated signal is received by a receiver, and the receiver may use the corresponding decryption method to obtain the content of the originally transmitted data content after the demodulation. However, in such a transmission scenario, the receiver is required to have decryption capability corresponding to the encryption method at the transmitter. That is, this type of signal transmission protection mechanism requires both the transmitter and the receiver to mutually cooperate with each other in terms of software as well as hardware.

Suppose the signal to be transmitted is digital television signal, the aforementioned encryption protection mechanism then requires the receiver, which may be a communication apparatus receiving the digital television signal, has to be equipped with a decryption capability corresponding to the encryption method of the transmitter. Accordingly, the cost and system complexity of the communication apparatus at the receiving end may be increased.

### SUMMARY

The invention is directed to a method for protecting digital broadcast content, which is adapted for a communication device. When a receiver which receives transport stream of the digital broadcast content executes scanning channel procedures, the transmitter of the digital broadcast content selectively transmits a program association table and a program mapping table in service information/program specific information to the receiver.

The invention is also directed to a communication apparatus. The communication apparatus utilizes a switch unit along with a multiplexer to selectively transmit the program association table and the program mapping table in the service information/program specific information to the receiver.

According to an embodiment, the invention provides a method for protecting digital broadcast content, which is adapted for a communication device, and includes following steps: acquiring and encoding a program content; providing a program association table (PAT) and a program map table (PMT) in a service information/program specific information (SI/PSI) of the program content; receiving the PAT and the PMT by a switch unit, and selectively providing the PAT and the PMT to a multiplexer; providing other tables in the SI/PSI; multiplexing the encoded program content, the PAT, the PMT and other tables in the SI/PSI into a first transport stream by the multiplexer, where the switch unit is controlled to provide the PAT and the PMT to the multiplexer, when a receiver that receives the transport stream is executing a scan channel procedure; and transmitting the first transport stream.

According to an embodiment, the invention provides a method for protecting digital broadcast content, which is adapted for a communication device, and includes following steps: acquiring and encoding a program content, where the program content is to be transmitted to a receiver; providing a program association table (PAT) in a service information/program specific information (SI/PSI) of the program content, when the receiver executes a scan channel procedure; and not providing the PAT in the SI/PSI of the program content after the receiver completes the scan channel procedure.

According to an embodiment, the invention provides a method for protecting digital broadcast content, which is adapted for a communication device, and includes following steps: acquiring and encoding a program content, where the program content is to be transmitted to a receiver; providing a program association table (PAT) in a service information/program specific information (SI/PSI) of the program content, when the receiver executes a scan channel procedure; and providing a fake PAT in the SI/PSI of the program content after the receiver completes the scan channel procedure.

According to an embodiment, the invention provides a method for protecting digital broadcast content, which is adapted for a communication device, and includes following steps: acquiring and encoding a program content, where the program content is to be transmitted to a receiver; generating a first transport stream when the receiver executes the scan channel procedure; and generating a second transport stream when the receiver completes the scan channel procedure.

According to an embodiment, the invention provides a communication apparatus, which includes an encoder module, a control module, a multiplexer, a transmitter module, and a switch unit. The encoder module is configured for acquiring and encoding a program content, and generating an encoded program content. The control module is configured for providing a program association table (PAT) and a program map table (PMT) in a service information/program specific information (SI/PSI) of the program content, and other tables in the SI/PSI. The multiplexer is connected to the encoder module and the control module, and configure for multiplexing the encoded program content, the PAT, the PMT and other tables in the SI/PSI into a first transport stream. The transmitter module is connected to the multiplexer, configured for transmitting the first transport stream. The switch unit is connected between the control module and the multiplexer. In addition, the switch unit is configured for enabling the control module to provide the PAT and the PMT to the multiplexer, when a receiver that receives the transport stream is executing a scan channel procedure.

Based upon the aforementioned descriptions, according to the aforementioned embodiments of the invention, the methods for protecting digital broadcast content and communication apparatuses using the same methods are provided. When a receiver of the communication apparatus executes the scan channel procedure, the PAT and the PMT are selectively transmitted to the multiplexer, and the transport stream being multiplexed from the PAT and the PMT, the encoded program content is transmitted to the receiver, so as to achieve the effectiveness of protecting the digital broadcast content.

Several embodiments accompanied with figures are described in detail below to further describe the invention in details.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a functional block diagram illustrating a communication apparatus according to an embodiment of the invention.

FIG. 2 is a partially enlarged functional block diagram illustrating another communication apparatus according to an embodiment of the invention.

FIG. 3 is a flowchart illustrating a method for protecting digital broadcast content according to an embodiment of the invention.

FIG. 4 is a flowchart illustrating another method for protecting digital broadcast content according to an embodiment of the invention.

### DETAILED DESCRIPTION OF DISCLOSED EMBODIMENTS

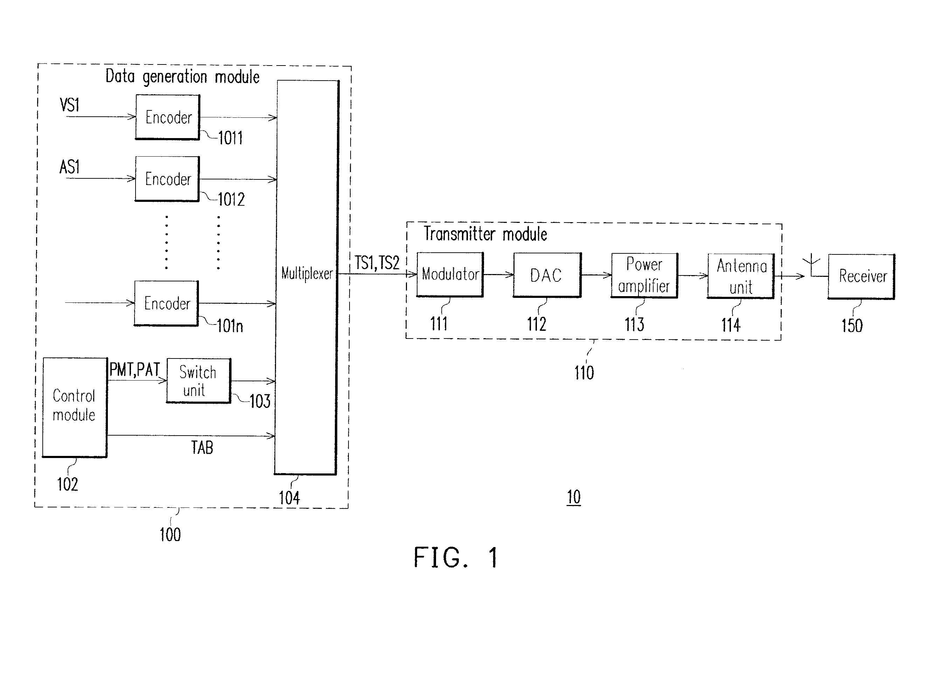

FIG. 1 is a functional block diagram illustrating a communication apparatus according to an embodiment of the invention. Referring to FIG. 1, a communication apparatus 10 is adapted for transmitting and protecting digital broadcast content, and includes a data generation module 100 and a transmitter module 110. The communication apparatus 10 or the separate transmitter module 110 can be a wireless communication dongle, which is connected to an electronic device (not shown), or can be a wireless communication module, which is embedded in the electronic device. The communication apparatus 10 is configured for transmitting video and sound to an output device (not shown). The electronic device can be, for example, a computer, a notebook computer, a tablet computer or a smartphone. The output device can be a display device, a television or a projector.

The data generation module 100 includes a plurality of encoders 1011-101n, a control module 102, a switch module 103 and a multiplexer 104. The encoder 1011-101n are configured for respectively acquiring and encoding program contents, and generating encoded program contents respectively. The program contents can be television channel programs obtained by the electronic device, a divided screen content of a computer, or a display screen showing a currently operated program in the computer, but the present invention is not limited thereto. Further, source data processed by the encoders 1011-101n can be video contents, audio contents or program contents which include both video content and audio content. For example, in the present embodiment, when a program includes video content VS1 and audio content AS1, the video content VS1 and audio content AS1 are respectively processed by the encoder 1011 and the encoder 1012 for data acquisition and encoding processing.

Referring to FIG. 1, the control module 102 is configured for providing service information/program specific information (SI/PSI). The SI and the PSI are respectively attached information of Digital Video Broadcasting (DVB) standard and video compression standard MPEG-2. It is noted that, program association table (PAT) and program mapping table (PMT) in the PSI are used by receiver(s) for decoding the corresponding section of each program in a transport stream in MPEG format. In other words, the receiver 150 which receives the transport stream in MPEG format is required to firstly acquire the PAT and the PMT from the transport stream, and consecutively decode the corresponding section of each program in the received transport stream. In the present embodiment, the communication apparatus 10 selectively transmits the PAT and the PMT to the multiplexer 104 through the switch unit 103, and meanwhile directly providing other (or remaining) tables TAB in the SI/PSI to the multiplexer 104. The other tables TAB in the SI/PSI are corresponding to the program contents in the transport stream.

Referring to FIG. 1, the switch unit 103 is connected between the control module 102 and the multiplexer 104, and is configured for receiving the PAT and the PMT transmitted by the control module 102, and is able to selectively transmit the PAT and the PMT to the multiplexer 104. When the receiver 150 which receives the transport stream executes a scan channel procedure, the switch unit 103 enables (or requests) the control module 102 to provide the PAT and the PMT to the multiplexer 104. In addition, in other embodiments, the switch unit is a switch, and the switch can be a physical switch, or can also be a software-controlled switch, but the present invention is not limited thereto.

The communication apparatus 10 can know whether the receiver 150 is executing the scan channel procedure. For example, when the receiver 150 is activated by a user for executing a scan channel procedure, the user can simultaneously operate the communication apparatus 10 for transmitting the PAT and the PMT. Also, for example, a user can press a physical button (not shown) or operate a menu function controlled by software on the communication apparatus 10, for controlling the communication apparatus 10 to transmit the PAT and the PMT, but the present invention is not limited thereto.

For another example, when the communication apparatus 10 and the receiver 150 both have wireless local area network communication capability, and the receiver 150 is executing the scan channel procedure, the receiver 150 can transmit a command to the communication apparatus 10. By doing so, the control module 102 is enabled to transmit the PAT and the PMT to the multiplexer 104 through controlling the switch unit 103. The wireless local area network can be, for example, a connectivity technology supporting wireless fidelity (Wi-Fi) standard or other wireless communication standards. The way that the communication apparatus 10 knows the receiver 150 is executing the scan channel procedure is not limited to the aforementioned approaches, so long as the communication apparatus 10 can transmit the PAT and the PMT to the receiver 150 when the receiver 150 is executing the scan channel procedure, such that the receiver 150 can successfully decode the transport stream for displaying the program content. However, the communication apparatus 10 does not transmit the PAT and the PMT when the receiver 150 does not execute the scan channel procedure, such that other receiving communication apparatuses cannot successfully decode the transport stream for displaying the program content.

The multiplexer 104 is connected to the encoders 1011-101n and the control module 102. In the present embodiment, when the receiver 150 is executing the scan channel procedure, the multiplexer 104 multiplexes the encoded program content, the PAT, the PMT, and other tables TAB in the SI/PSI into a first transport stream TS1, and then transmit the first transport stream TS1 to the transmitter module 110. When the receiver 150 does not execute the scan channel procedure, the switch unit 103 makes the channel open-circuit (or disables the channel), such that the control module 102 cannot transmit the PAT and the PMT to the multiplexer 104. Then, the multiplexer 104 merely multiplexes the encoded program content, and other tables TAB in the SI/PSI into a second transport stream TS2, and transmit the second transport stream TS2 to the transmitter module 110. Suppose a receiver never receives the first transport stream TS1 which include the PAT and the PMT, such receiver cannot successfully decode the second transport stream TS2 for acquiring the program content.

The multiplexer 104 is configured for transmitting the first transport stream TS1 or the second transport stream TS2 to the transmitter module 110. The transmitter module 110 includes a modulator 111, a digital-to-analog converter (DAC) 112, a power amplifier 113 and an antenna unit 114. The modulator 111 is connected to the multiplexer 104, and configured for modulating the first transport stream TS1 or the second transport stream TS2. The DAC 112 is connected to the modulator 111, and configured for converting the modulated first transport stream TS1 or the modulated second transport stream TS2 into analog signals adapted to digital television broadcast formats. The power amplifier 113 is connected to the DAC 112, and is configured for amplifying the converted analog signals. The antenna unit 114 is connected to the power amplifier 113, and is configured for transmitting the amplified (or enhanced) analog signals.

Referring to FIG. 1, the communication apparatus 10 can be a personal computer, a notebook computer or a tablet computer, which has a wireless communication module capable of transmitting digital television broadcast signals. The receiver 150 which receives a first transport stream TS1 or a second transport stream TS2 can be a television or a display device which has television signal receiving capability. The program content(s) to be displayed can be an extended desk content or a display content of a single software program, but the present invention is not limited thereto.

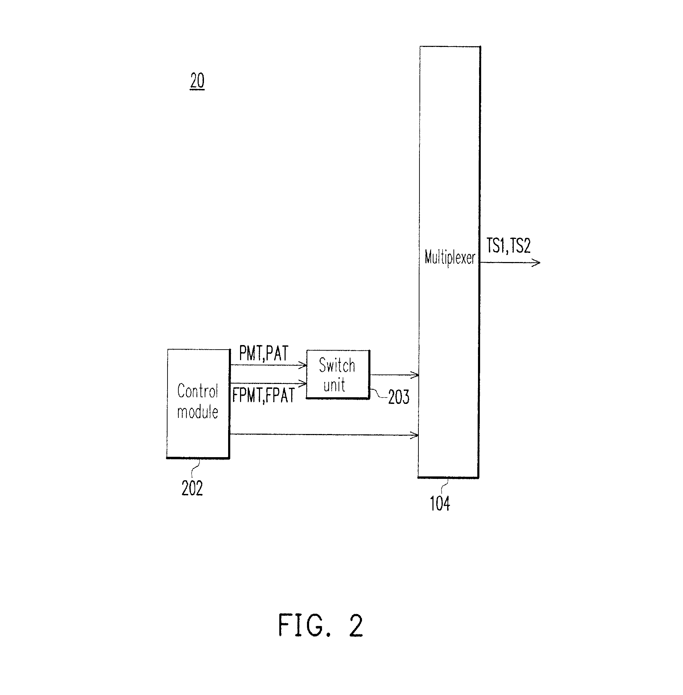

FIG. 2 is a partially enlarged functional block diagram illustrating another communication apparatus according to an embodiment of the invention. Referring to FIG. 2, in the present embodiment, a communication apparatus 20 is mostly similar to the communication apparatus 10 illustrated in FIG. 1, where the data generation module 100 of the communication apparatus 20 includes a control module 202 and a switch unit 203. The control module 202 is configured for providing a PAT and a PMT, and also providing a fake PAT FPAT and a fake PMT FPMT. Since the communication apparatus 20 is mostly similar to the communication apparatus 10, only the control module 202, the switch unit 203 and the multiplexer 104 are illustrated in FIG. 2.

When the receiver 150 is executing the scan channel procedure, the switch unit 203 disables (or switches off) a channel (or a path) which provides the fake PAT FPAT and the fake PMT FPMT to the multiplexer 104, but only providing the PAT and the PMT to the multiplexer 104. After the receiver 150 completes executing the scan channel procedure, and when the receiver 150 does not execute the scan channel procedure, the switch unit 203 disables (or switches off) a channel (or a path) which provides the PAT and the PMT to the multiplexer 104, and only provides the fake PAT FPAT and the fake PMT FPMT to the multiplexer 104. The multiplexer 104 multiplexes the encoded program content, the fake PAT FPAT, the fake PMT FPMT, and other tables TAB in the SI/PSI into a second transport stream TS2, and the second transport stream TS2 is transmitted through the transmitter module110. Suppose other receiver(s) which are not granted permission to receive the transport stream intend to receive signals of the digital broadcast program content, since such receiver(s) only receive the fake PAT FPAT and the fake PMT FPMT from the second transport stream TS2, the receiver(s) cannot successfully decode the program content and display the program content.

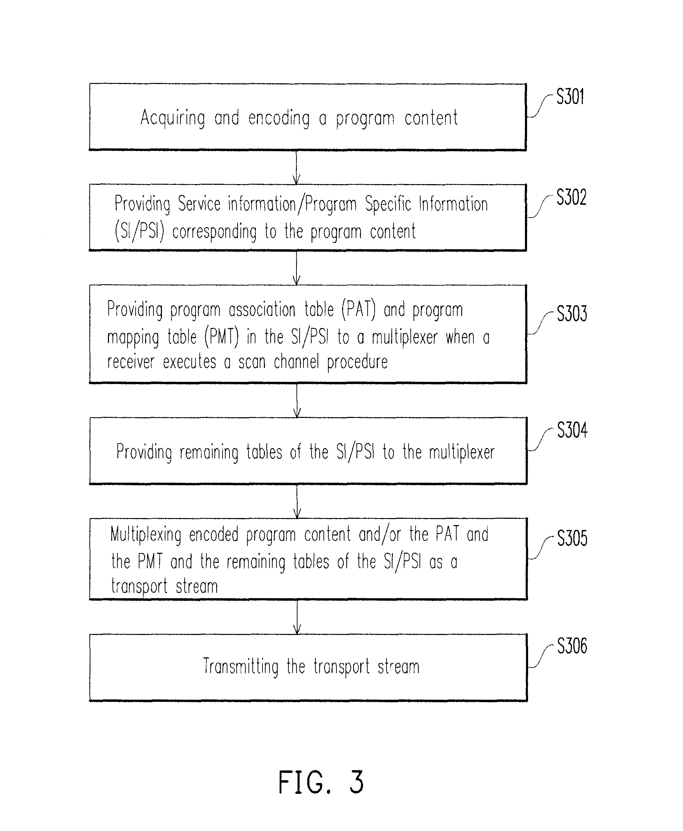

FIG. 3 is a flowchart illustrating a method for protecting digital broadcast content according to an embodiment of the invention. Referring to both FIG. 1 and FIG. 3, the proposed method for protecting digital broadcast content initiates from step S301. In the step S301, the control module 102 acquires and encodes program content; the control unit 102 provides the SI/PSI of the program content (step S302); when a receiver (the receiver 150) corresponding to the communication apparatus 10 executes the scan channel procedure, the switch unit 103 selectively provides the PAT and the PMT to the multiplexer 104 (step S303); the control module 102 provides other tables TAB in the SI/PSI (step S304); the encoded program content, the PAT , the PMT, and other tables TAB are multiplexed into the first transport stream TS1 (step S305) through the multiplexer 104; finally, the first transport stream TS1 is transmitted (step S306). In addition, when the receiver 150 which receives the first transport stream TS1 does not execute the scan channel procedure, the control module 102 controls the switch unit 103 not to provide the PAT and the PMT to the multiplexer 104.

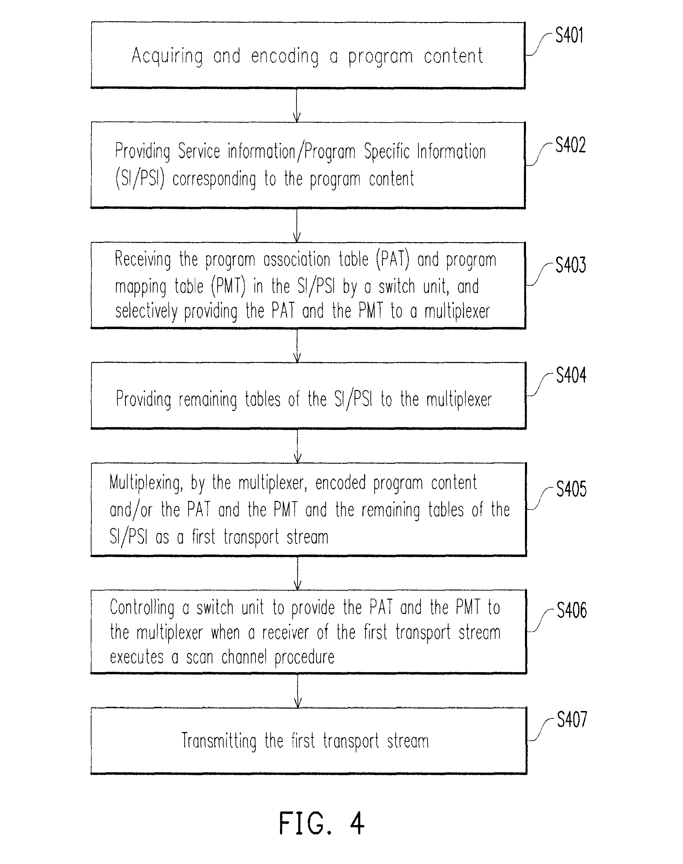

FIG. 4 is a flowchart illustrating another method for protecting digital broadcast content according to an embodiment of the invention. Referring to FIG. 1, FIG. 2, and FIG. 4, the proposed method for protecting digital broadcast content initiates from step S401. Firstly, in the step S401, program content is acquired and encoded. Then, in step S402, the PAT and the PMT in the SI/PSI of the program content are provided. In step S403, the PAT and the PMT are received through the switch unit 103, and the PAT and the PMT are selectively provided to the multiplexer 104 through the switch unit 103. Then, in step S404, other tables TAB in the SI/PSI are provided. Further, in step S405, the encoded program content, the PAT, the PMT, and other tables TAB in the SI/PSI are multiplexed into the first transport stream TS1. In step S406, when the receiver 150 which receives the first transport stream TS1 is executing the scan channel procedure, the control module 102 controls the switch unit 103 to transmit the PAT and the PMT to the multiplexer 104. Finally, in step S407, the first transport stream TS1 is transmitted.

After the receiver 150 completes executing the scan channel procedure, when the receiver 150 does not execute the scan channel procedure, the control module 202 controls the switch unit 203 to transmit the fake PAT FPAT and the fake PMT FPMT to the multiplexer 104. Alternatively, when the receiver 150 does not execute the scan channel procedure, the control module 102 controls the switch unit 103 not transmit the PAT and the PMT to the multiplexer 104.

In summary, the embodiments of the invention provide methods for protecting digital broadcast content and communication apparatuses using the same methods. Under the circumstances without modifying communication apparatuses at receiving ends, when the receiver executes the scan channel procedure, the PAT and the PMT are transmitted to the receiver. Further, when the receiver does not execute the scan channel procedure, the PAT and the PMT are not transmitted to the receiver, or the fake PAT and the fake PMT are transmitted to the receiver, such that receiver(s) which are not granted permission for accessing the digital broadcast content cannot decode the program content from the transport stream, thereby achieving the effectiveness of protecting the digital broadcast content.

It will be apparent to those skilled in the art that various modifications and variations can be made to the structure of the invention without departing from the scope or spirit of the invention. In view of the foregoing, it is intended that the invention cover modifications and variations of this invention provided they fall within the scope of the following claims and their equivalents.

## Claims

1. A method for protecting digital broadcast content, adapted to a communication apparatus (10), comprising:
acquiring and encoding a program content;
providing a program association table (PAT) and a program map table (PMT) in a service information/program specific information (SI/PSI) of the program content;
providing other tables in the SI/PSI;
multiplexing the encoded program content, the PAT, the PMT and other tables in the SI/PSI into a first transport stream by a multiplexer (104); and
transmitting the first transport stream;
**characterized by** receiving the PAT and the PMT by a switch unit (103) which selectively provides the PAT and the PMT to the multiplexer (104) when a receiver (150) receiving the first transport stream is executing a scan channel procedure.

2. The method for protecting digital broadcast content as claimed in claim 1, wherein the switch unit (103) is a switch, and the method for protecting digital broadcast content further comprises:
making the switch unit (103) open-circuit for not providing the PAT and the PMT in the SI/PSI, when the receiver (150) of the communication apparatus (10) does not execute the scan channel procedure; and
multiplexing the encoded program content, and other tables in the SI/PSI into a second transport stream by the multiplexer (104); and
transmitting the second transport stream.

3. The method for protecting digital broadcast content as claimed in claim 1, further comprising:
providing a fake PAT and a fake PMT to the switch unit (103), when the receiver (150) of the communication apparatus (10) does not execute the scan channel procedure;
multiplexing the encoded program content, the fake PAT, the fake PMT, and other tables in the SI/PSI into a second transport stream by the multiplexer (104); and
transmitting the second transport stream.

4. The method for protecting digital broadcast content as claimed in claim 2, wherein the step of making the switch unit (103) open-circuit when the receiver (150) of the communication apparatus (10) does not execute the scan channel procedure comprises:
making the switch unit (103) open-circuit for switching off a channel from the PAT and the PMT to the multiplexing process.

5. The method for protecting digital broadcast content as claimed in claim 3, wherein the step of making the switch unit (103) open-circuit when the receiver (150) of the communication apparatus (10) does not execute the scan channel procedure comprises:
switching the switch unit (103) from originally providing the PAT and the PMT to providing the fake PAT and the fake PMT.

6. A method for protecting digital broadcast content, adapted to a communication apparatus (10), comprising:
acquiring and encoding a program content, which is to be transmitted to a receiver (150);
providing a program association table (PAT) in a service information/program specific information (SI/PSI) of the program content, when the receiver (150) executes a scan channel procedure; and
**characterized by** not providing the PAT in the SI/PSI of the program content after the receiver (150) completes the scan channel procedure.

7. A method for protecting digital broadcast content, adapted to a communication apparatus (10), comprising:
acquiring and encoding a program content, which is to be transmitted to a receiver (150);
providing a program association table (PAT) in a service information/program specific information (SI/PSI) of the program content, when the receiver (150) executes a scan channel procedure; and
**characterized by** providing a fake PAT in the SI/PSI of the program content after the receiver (150) completes the scan channel procedure.

8. A method for protecting digital broadcast content, adapted to a communication apparatus (10), comprising:
acquiring and encoding a program content, which is to be transmitted to a receiver (150);
generating a first transport stream when the receiver (150) executes a scan channel procedure; and
generating a second transport stream when the receiver (150) completes the scan channel procedure.

9. A communication apparatus (10), adapted for transmitting and protecting digital broadcast content, the communication apparatus (100) comprising:
an encoder module (1101), configured for acquiring and encoding a program content, and generating an encoded program content;
a control module (102), configured for providing a program association table (PAT) and a program map table (PMT) in a service information/program specific information (SI/PSI) of the program content, and other tables in the SI/PSI;
a multiplexer (104), connected to the encoder module (1101) and the control module (102), configure for multiplexing the encoded program content, the PAT, the PMT and other tables in the SI/PSI into a first transport stream;
a transmitter module (110), connected to the multiplexer (100), configured for transmitting the first transport stream; and
**characterized by** a switch unit (103), connected between the control module (102) and the multiplexer (104), configured for enabling the control module (102) to provide the PAT and the PMT to the multiplexer (104), when a receiver (150) receiving the transport stream is executing a scan channel procedure.

10. The communication apparatus (10) as claimed in claim 9, wherein:
the switch unit (103) is a switch;
when the receiver (150) that receives the first transport stream is not executing the scan channel procedure, the switch (103) is open-circuit, for not providing the PAT and the PMT in the SI/PSI to the multiplexer (104);
the multiplexer (104) multiplexes the encoded program content, and other tables in the SI/PSI into a second transport stream; and
the transmitter module (110) transmits the second transport stream.

11. The communication apparatus (10) as claimed in claim 9, wherein:
when the receiver (150) is not executing the scan channel procedure, the switch unit (103) is switched such that the control module provides a fake PAT and a fake PMT to the multiplexer (104);
the multiplexer (104) multiplexes the encoded program content, the fake PAT, the fake PMT and other tables in the SI/PSI into a second transport stream; and
the transmitter module (110) transmits the second transport stream.

12. The communication apparatus (10) as claimed in claim 9, wherein:
when the receiver (150) is not executing the scan channel procedure, the switch unit (103) is open-circuit for switching off a channel for providing the PAT and the PMT to the multiplexing process.

13. The communication apparatus (10) as claimed in claim 9, wherein:
when the receiver (150) is not executing the scan channel procedure, the switch unit (103) is switched from originally providing the PAT and the PMT to providing the fake PAT and the fake PMT.

14. The communication apparatus (10) as claimed in claim 9, wherein the transmitter module (110) comprises:
a modulator (111), connected to the multiplexer (104), configured for modulating the first transport stream and the second transport stream;
a digital-to-analog converter (112), connected to the modulator (111), configured for converting the modulated first transport stream and the modulated second transport stream to analog signals of digital television broadcasting;
a power amplifier (113), connected to the digital-to-analog converter (112), configured for amplifying the analog signals; and
an antenna unit (114), connected to the power amplifier (113), configured for transmitting the amplified analog signals.
